# EUROPÄISCHE PATENTANMELDUNG

(11) **EP 1 489 389 A2**
(43) Veröffentlichungstag der Anmeldung: **22.12.2004**
(21) Anmeldenummer: 04012679.9
(22) Anmeldetag: 28.05.2004
(51) Int. Cl.: G01D 11/24

(54) **Elektrisches Bauteil, insbesondere Positionssensor**

(30) Priorität: 11.06.2003 DE 20309009 U
(71) Anmelder: Festo AG & Co, 73734 Esslingen (DE)
(72) Erfinder: Schütte, Manfred, 73779 Deizisau (DE); Schauz, Stephan, 73312 Geislingen (DE)
(74) Vertreter: Abel, Martin

(57) **Zusammenfassung**

Es handelt sich um ein elektrisches Bauteil mit einem Hauptkörper, der einen als MID-Bauteil (MID = Moulded Interconnect Device) ausgeführten Schaltungsträger (12) und einen an dem Schaltungsträger (12) angeordneten Anschlusskörper (13) aufweist. Der Anschlusskörper (13) verfügt über mehrere nebeneinanderliegende Führungskanäle (33), durch die zu kontaktierende Adern (16) eines Kabels (3) hindurchsteckbar sind und deren Kanalwandungen Führungsflächen (47) bilden, die in der Einsteckrichtung (42) der Adern (16) derart divergieren, dass die Adern (16) beim Hindurchstecken auseinandergespreizt werden. Der Schaltungsträger (12) weist im Anschluss an die Führungskanäle (33) mit Leiterbahnen (15) verbundene Kontaktierungsflächen (26) auf, an denen die Adern (16) mittels eines Kontaktwerkstoffes elektrisch leitend befestigbar sind. Durch entsprechenden Längsverlauf der Führungsflächen (47) werden die Adern (16) beim Austreten aus den Führungskanälen (33) zumindest annähernd zur längsseitigen Anlage an den sich anschließenden Kontaktierungsflächen (26) geführt.

## Beschreibung

Die Erfindung betrifft ein elektrisches Bauteil, insbesondere Positionssensor, mit einem Hauptkörper, der einen als MID-Bauteil (MID = Moulded Interconnect Device) ausgeführten Schaltungsträger und einen an dem Schaltungsträger angeordneten Anschlusskörper aufweist, wobei an dem Anschlusskörper ein mehradriges elektrisches Kabel fixierbar oder fixiert ist, dessen Adern den Anschlusskörper zur Kontaktierung von Leiterbahnen des Schaltungsträgers durchsetzen.

Ein als Positionssensor ausgebildetes elektrisches Bauteil dieser Art geht aus der DE 20211518 U1 hervor. Dieses ist auf Basis eines spritzgegossenen 3D-Schaltungsträgers nach MID-Konzept realisiert und ermöglicht auf kleinstem Raum eine optimale Anordnung von Leiterbahnen und elektronischen Bauteilen. Allerdings ist bei diesem Bauteil noch keine konkrete Lösung für die elektrische Kontaktierung der Adern des zu dem Schaltungsträger führenden elektrischen Kabels mit den Leiterbahnen des Schaltungsträgers vorgesehen.

Zu dem Thema der elektrischen Kontaktierung von MID-Bauteilen mit externen Einrichtungen wird in der EP 1101667 A2 vorgeschlagen, am Trägerelement eines MID-Trägers einstückige Anschlussstifte anzuformen und zu metallisieren. Dadurch kann jedoch lediglich eine Steckverbindung mit einem komplementären Steckergegenstück hergestellt werden.

Es ist daher die Aufgabe der vorliegenden Erfindung, ein elektrisches Bauteil der eingangs genannten Art zu schaffen, das eine einfache und zuverlässige Kontaktierung des elektrischen Kabels ermöglicht.

Zur Lösung dieser Aufgabe ist vorgesehen, dass der Anschlusskörper über mehrere nebeneinanderliegende Führungskanäle verfügt, durch die die zu kontaktierenden Adern des Kabels hindurchsteckbar sind und deren Kanalwandungen Führungsflächen bilden, die in der Einsteckrichtung der Adern derart divergieren, dass die Adern beim Hindurchstecken auseinandergespreizt werden, und dass der Schaltungsträger sich in Verlängerung der Führungskanäle an deren Austrittsmündungen anschließende, mit den Leiterbahnen verbundene Kontaktierungsflächen aufweist, an denen die Adern mittels eines Kontaktwerkstoffes elektrisch leitend befestigbar oder befestigt sind, wobei der Längsverlauf der Führungsflächen so ausgebildet ist, dass sie die Adern beim Austreten aus den Führungskanälen zumindest annähernd zur längsseitigen Anlage an den sich anschließenden Kontaktierungsflächen führen.

Bei der Montage des elektrischen Bauteils kann das Kabel mit seinen vom Kabelmantel befreiten Adern voraus in den Anschlusskörper eingesteckt werden, wobei die Adern in die Führungskanäle eintreten und aufgrund des divergierenden Verlaufes der Führungsflächen auseinandergespreizt werden. Die im Ursprungszustand sehr nahe beieinanderliegenden Adern werden auf diese Weise selbsttätig auf einen Abstand zueinander gebracht, der eine sichere Kontaktierung mit ausreichend großen Kontaktflächen zulässt. Ein weiterer Vorteil besteht darin, dass die Adern durch die entsprechend gestalteten Führungsflächen zielgerichtet in eine Position längsseits neben den Kontaktierungsflächen geleitet werden, sodass sie mit den Kontaktierungsflächen vorzugsweise in unmittelbaren Kontakt gelangen oder zumindest nur minimal beabstandet sind. Beim anschließenden leitenden Befestigen der Adern an den Kontaktierungsflächen genügt es somit, die Adern beim Applizieren des Kontaktwerkstoffes mit leichtem Druck an die Kontaktierungsflächen anzudrücken, wobei auf diesen Andrückvorgang unter Umständen sogar verzichtet werden kann. Ein solcher Aufbau eignet sich für praktische jedes MID-Bauteil, wobei derzeit vor allem ein Einsatz in Verbindung mit einem Positionssensor als besonders vorteilhaft eingestuft wird.

Zweckmäßige Weiterbildung der Erfindung gehen aus den Unteransprüchen hervor.

Der die Führungskanäle mit den Führungsflächen aufweisende Anschlusskörper ist zweckmäßigerweise einstückig mit dem die Leiterbahnen und eventuell auch elektronische Bauteile tragenden Trägerelement des Schaltungsträgers ausgebildet, sodass eine gemeinsame Herstellung im Rahmen eines Spritzgießvorganges möglich ist.

Bei der Montage des elektrischen Bauteils wird das Kabel mit seinen Adern in einer Einsteckrichtung in den Anschlusskörper eingeführt, wobei diese Einsteckrichtung und eine dazu rechtwinkelige Querrichtung eine Hauptebene des den Schaltungsträger enthaltenden Hauptkörpers definieren. Um möglichst viel Platz für die Kontaktierungsmaßnahmen zur Verfügung zu haben und somit den Kontaktierungsvorgang zu vereinfachen, ist es in diesem Zusammenhang von Vorteil, wenn die von den Führungsflächen definierten Austrittszonen der Führungskanäle sowie die sich daran anschließenden Kontaktierungsflächen nebeneinander angeordnet sind, wenn man die Anordnung in einer zu der Hauptebene rechtwinkeligen Blickrichtung betrachtet. Diese Blickrichtung sei im Folgenden auch als Höhenrichtung bezeichnet.

Eine optimale Trennung der Kontaktierungszonen ist möglich, wenn in der Querrichtung einander benachbarte Kontaktierungsflächen in der vorgenannten Höhenrichtung auf unterschiedlichem Höhenniveau liegen. Dies lässt sich durch einen voneinander abweichenden Verlauf der Führungsflächen relativ einfach realisieren.

Die Kontaktierungsflächen sind zweckmäßigerweise so ausgerichtet, dass ihr Flächenverlauf mit der Austrittsrichtung der aus den Führungskanälen austretenden Adern zusammenfällt. Dabei schließen sich die Kontaktierungsflächen insbesondere stufenlos an die Führungsflächen an. Es besteht die Möglichkeit, die Kontaktierungsflächen zumindest teilweise in einer zu der vorgenannten Hauptebene parallelen Ausdehnungsebene anzuordnen oder beispielsweise auch in einer in der Einsteckrichtung, insbesondere nach Art einer Rampe, ansteigenden Ausdehnungsebene. Um eine optimale Verteilung der Kontaktierungszonen zu erhalten, können bei den Adern ein und desselben Kabels unterschiedliche dieser Anordnungen verwirklicht werden.

Die Kontaktierungsflächen können auch so angeordnet werden, dass sie zumindest teilweise in einer quer und vorzugsweise rechtwinkelig zu der oben definierten Hauptebene verlaufenden Ausdehnungsebene liegen, sodass sie die Adern seitlich flankieren.

Eine zuverlässige gegenseitige Abtrennung der Kontaktierungszonen wird erreicht und somit die Bildung von Kurzschlüssen beim Kontaktierungsvorgang zuverlässig verhindert, wenn zwischen in der Querrichtung benachbarten Kontaktierungsflächen an dem die Leiterbahnen tragenden Trägerelement des Schaltungsträgers ausgebildete Trennwände vorgesehen sind.

Um das stirnseitige Einfädeln der Adern beim Einstecken in die Führungskanäle wirksam zu unterstützen, sind die Führungskanäle im Bereich ihrer Eintrittsmündungen zweckmäßigerweise mit entsprechenden Einführschrägen versehen.

Bei dem elektrischen Bauteil lässt sich auch sehr bequem eine zuverlässige Zugentlastung des angeschlossenen Kabels erreichen. Hierzu ist der Anschlusskörper mit einer Aufnahmevertiefung versehen, die den Endabschnitt des Kabelmantels aufnimmt und deren Wandung von einem seitlich einmündenden Klebekanal durchsetzt ist, der zum Einbringen von Klebstoff dient, welcher, aufgrund Kapillarwirkung, um den Kabelmantel herum eine Klebeverbindung zwischen dem Kabelmantel und der Innenfläche der Aufnahmevertiefung herstellt.

Nachfolgend wird die Erfindung anhand der beiliegenden Zeichnung näher erläutert. In dieser zeigen:
- Fig. 1: eine mögliche Bauform des erfindungsgemäßen elektrischen Bauteils in einer Ausgestaltung als Positionssensor in einer Unteransicht, wobei zur besseren Sichtbarmachung der einzelnen Komponenten vorhandenes Füllmaterial nicht abgebildet ist,
- Fig. 2: eine vergrößerte Darstellung des Endabschnittes des in Fig. 1 gezeigten Bauteils im Längsschnitt in perspektivischer Darstellung,
- Fig. 3: eine Ansicht der in Fig. 3 gezeigten Anordnung mit Blick auf die Schnittebene in Richtung des Pfeils III,
- Fig. 4: eine Einzeldarstellung des bei dem Bauteil der Fig. 1 bis 3 angeschlossenen Kabels, wobei die im angeschlossenen Zustand vorliegende auseinandergespreizte Stellung der Adern ersichtlich ist,
- Fig. 5: das Kabel aus Fig. 4 im Ausgangszustand vor dem Einstecken in den Anschlusskörper,
- Fig. 6: mehrere zu einer Baueinheit zusammengefasste elektrische Bauteile mit unterschiedlich ausgestalteten Kontaktierungszonen zur Verdeutlichung der Variabilität der erfindungsgemäßen Maßnahmen und
- Fig. 7: eine Rückansicht der Anordnung aus Fig. 6 mit Blickrichtung gemäß Pfeil VII, die mit der Einsteckrichtung der nicht gezeigten Kabel übereinstimmt.

Die Ausführungsbeispiele zeigen elektrische Bauteile 1 in einer exemplarischen Ausgestaltung als Positionssensoren. Alternativ lässt sich die Erfindung allerdings auch an beliebigen anderen elektrischen Bauteilen realisieren, beispielsweise bei der Kontaktierung elektrischer Ventilantriebe wie Elektromagnete oder Piezo-Aktuatoren. Obgleich die nachfolgende Beschreibung anhand eines Positionssensors erfolgt, gelten die Ausführungen dementsprechend auch für die anderen möglichen Ausführungsformen.

Zu erwähnen ist ferner, dass unter dem Begriff "elektrisches Bauteil" ein Bauteil zu verstehen ist, das mit elektrischen und/oder mit elektronischen Komponenten ausgestattet ist.

Der Positionssensor 1 verfügt über ein längliches, insbesondere balkenähnlich gestaltetes Funktionsteil 2, an das ein Kabel 3 angeschlossen ist. Das Funktionsteil 2 hat eine Längsachse 4 sowie, in Richtung der Längsachse 4 orientiert, eine Vorderseite 5 und eine Rückseite 6. Das Kabel 6 geht rückseitig, in axialer Verlängerung, von dem Funktionsteil 2 ab.

Der Positionssensor 1 ist insbesondere zur Installation an einem Linearantrieb vorgesehen, um eine vorbestimmte Position des Antriebsteils dieses Linearantriebes zu erfassen. In der Regel wird das Antriebsteil ein durch Fluidbeaufschlagung beaufschlagbarer Kolben sein. Die Positionserfassung geschieht berührungslos und basiert auf dem Zusammenwirken eines an dem Antriebsteil angeordneten Betätigungselementes mit einem in dem Funktionsteil 2 angeordneten Sensorelement 7.

Das Funktionsteil 2 besitzt einen länglichen, gehäuseartig ausgebildeten Hauptkörper 8, der sich aus einem länglichen Schaltungsträger 12 und einem mit diesem im Bereich der Rückseite 6 fest verbundenen Anschlusskörper 13 zusammensetzt.

Der Schaltungsträger 12 ist als MID-Bauteil (MID = Moulded Interconnect Device) ausgeführt, der zusammen mit dem Anschlusskörper 13 wenigstens teilweise die Funktion des Sensorgehäuses übernimmt und zugleich die für den Betrieb des Sensorelementes 7 erforderliche elektrische Schaltung und die zugehörigen Schaltungskomponenten sowie das Sensorelement 7 selbst trägt. Die oben erwähnte Längsachse 4 ist zugleich die Längsachse des Schaltungsträgers 12.

Der Schaltungsträger 12 enthält ein längliches Trägerelement 14 aus spritzgegossenem Kunststoffmaterial. Es bildet die tragende Struktur des Funktionsteils 2 und fungiert gleichzeitig als Träger für die erwähnte Schaltung und die zugehörigen elektrischen und/oder elektronischen Komponenten.

Zu der Schaltung gehören mehrere an der Oberfläche des Trägerelementes 14 verlaufende Leiterbahnen 15, die unter anderem dazu dienen, eventuell unter Zwischenschaltung elektronischer Komponenten, die elektrisch leitenden Adern 16 des Kabels 3 mit dem Sensorelement 7 und eventuell sonstigen Elektronikkomponenten der Schaltung elektrisch zu verbinden. Gebildet sind die Leiterbahnen 15 von einer auf das Trägerelement 14 aufgebrachten strukturierten Metallschicht. Die Herstellung geschieht beispielsweise durch großflächige Metallisierung des zuvor durch Spritzgießen hergestellten Trägerelementes 14 mit nachfolgender Strukturierung durch galvanische Behandlung. Besonders vorteilhaft ist, dass durch diese MID-Technologie problemlos ein dreidimensionales Leiterbild erzeugt werden kann, das einen optimalen, platzsparenden Leiterverlauf ermöglicht.

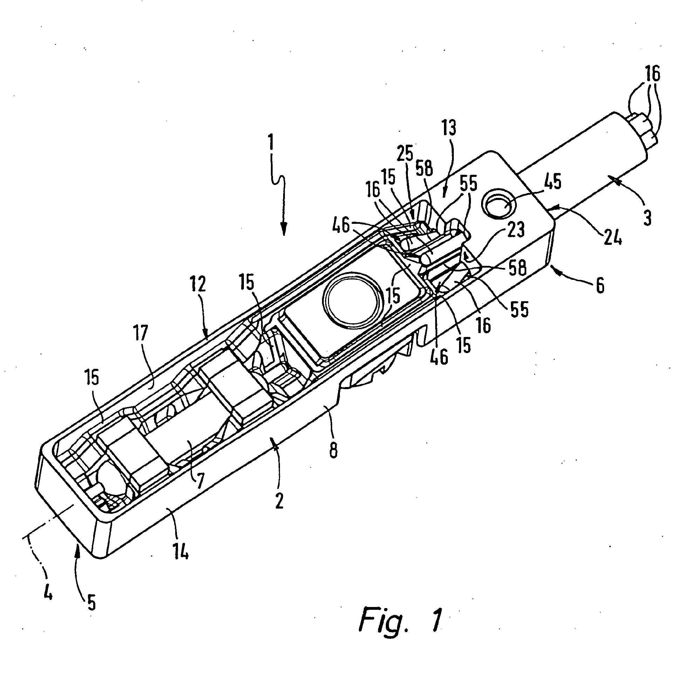

Aus Fig. 1 wird deutlich, dass der Schaltungsträger 12 eine längsverlaufende, beliebig strukturierte Vertiefung 17 aufweisen kann, wobei die Komponenten der elektrischen Schaltung in dieser Vertiefung an entsprechenden Abschnitten des Trägerelementes 14 ausgebildet sind. Im komplett montierten Zustand des Positionssensors 1 ist die Vertiefung 17 durch ein nicht näher dargestelltes Füllmaterial ausgefüllt, das die komplette Schaltung überdeckt und mit dem Material des Trägerelementes 14 stoffschlüssig derart verbunden ist, dass eine hermetisch dichte Abdeckung bzw. Kapselung der zur Schaltung gehörenden Komponenten vorliegt.

Über das Kabel 3 kann der Positionssensor an eine elektronische Auswerteeinrichtung oder ein sonstiges elektronisches Gerät angeschlossen werden. Das Kabel 3 enthält mehrere der schon erwähnten Adern 16, die vorzugsweise jeweils aus einer Vielzahl von Litzen aufgebaut sind und die in zueinander paralleler Anordnung gemeinsam von einem isolierenden Kabelmantel 18 umschlossen sind.

Beim Ausführungsbeispiel sind die einzelnen Adern 16 jeweils nochmals von einem gesonderten Schutzmantel 22 umhüllt, sodass zwischen dem Kabelmantel 18 und den Adern 16 kein unmittelbarer Kontakt vorliegt.

Der schon erwähnte Anschlusskörper 13 ist bevorzugt einstückig mit dem Trägerelement 14 ausgeführt, sodass es einen Bestandteil des Schaltungsträgers 12 bildet. Die Herstellung ist auf diese Weise besonders einfach.

Der Anschlusskörper 13 besitzt eine dem Trägerelement 14 axial zugewandte Vorderseite 23 und eine entgegengesetzte Rückseite 24. Seine Vorderseite 23 begrenzt den rückseitigen Endabschnitt der Vertiefung 17, wobei besagter Endabschnitt einen Kontaktierungsraum 25 bildet, in dem die elektrische Kontaktierung zwischen den Adern 16 und den Leiterbahnen 15 vorgenommen ist. In diesem Kontaktierungsraum 25 ist für jede zu kontaktierende Ader 16 eine mit einer Leiterbahn 15 verbundene Kontaktierungsfläche 26 vorgesehen, die an einem einstückig mit der entsprechenden Leiterbahn 15 verbundenen Kontaktierungs-Pad 27 ausgebildet ist, der zu der durch MID-Fertigung realisierten Schaltung des Schaltungsträgers 12 gehört.

Ausgehend von der Rückseite 24 erstreckt sich in den Anschlusskörper 13 axial eine sacklochartige Aufnahmevertiefung 28 hinein, deren Außenkontur derjenigen des Kabelmantels 18 entspricht, sodass letzterer mit geringfügigem Spiel einsteckbar ist. Beim Ausführungsbeispiel hat der Kabelmantel 18 eine kreisförmige Außenkontur, sodass die Aufnahmevertiefung 28 kreiszylindrisch geformt ist.

Die axial zwischen der Aufnahmevertiefung 28 und dem Kontaktierungsraum 25 liegende Vorderwand 32 des Anschlusskörpers 13 ist von einer der Anzahl der Adern 16 entsprechenden Anzahl von Führungskanälen 33 durchsetzt. Sie ermöglichen jeweils den Durchtritt einer Ader 16 von der Aufnahmevertiefung 28 zum Kontaktierungsraum 25. Jeder Führungskanal 33 hat eine am Grund der Aufnahmevertiefung 28 liegende Eintrittsmündung 34 und eine an der dem Kontaktierungsraum 25 zugewandten Vorderseite 23 der Vorderwand 32 liegende Austrittsmündung 35.

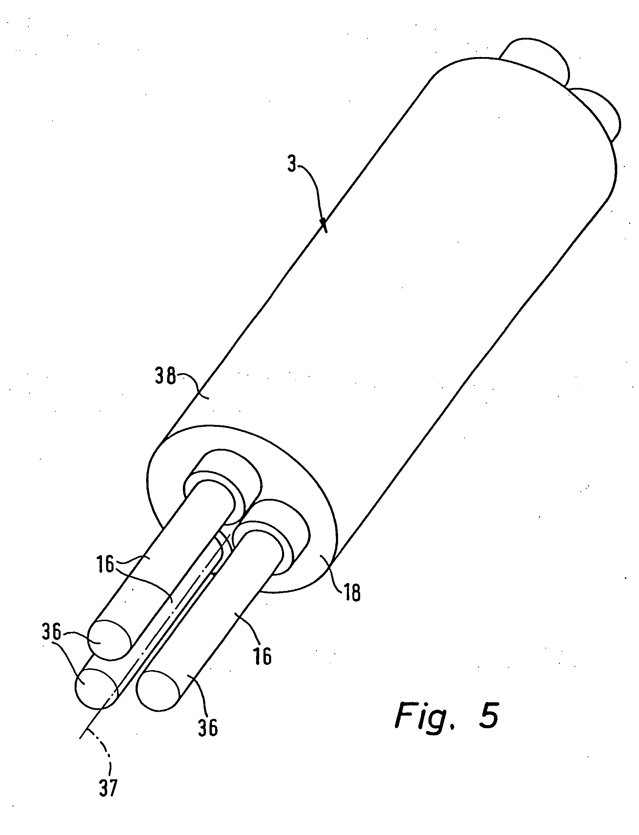

Vor der Montage am Funktionsteil 2 wird das Kabel 3 an der anzuschließenden Vorderseite so abisoliert, dass gemäß Fig. 5 die von sämtlichen Ummantelungen freigelegten Endabschnitte 36 der Adern 16 zum Vorschein kommen. Bei diesem in Fig. 5 gezeigten Ausgangszustand liegen die Endabschnitte 36 in Parallellage relativ nahe beieinander. Die Abbildung zeigt ein dreiadriges Kabel 3, bei dem die drei Adern 16 im gleichen Winkelabstand um die Kabel-Längsachse 37 herum platziert sind.

Im montierten Zustand taucht der Kabelmantel mit seinem sich an die Endabschnitte 36 der Adern 16 anschließenden vorderen Endabschnitt 38 koaxial in die Aufnahmevertiefung 28 bis zu annähernd deren Grund hin ein. Die vorgelagerten Endabschnitte 36 der Adern 16 durchgreifen jeweils einen der Führungskanäle 33 und liegen im Kontaktierungsraum 25 mit einer oder mehreren Stellen ihres Außenumfanges längsseits an einer der Kontaktierungsflächen 26 an. Jedem Führungskanal 33 ist zumindest eine solche Kontaktierungsfläche 26 zugeordnet, die im Anschluss an die Austrittsmündung 35 des betreffenden Führungskanals 33 angeordnet ist.

Um das Einfädeln der Adern 16 in die Führungskanäle 33 zu erleichtern, werden sie vorher zweckmäßigerweise in ein Zinnbad getaucht, um die mechanische Stabilität zu erhöhen. Außerdem ist jeder Führungskanal 33 im Bereich der Eintrittsmündung 34 mit einer sich in der Einsteckrichtung 42 der Adern 16 bzw. des Kabels 3 verjüngenden Einführschräge 43 versehen, die das zielgerichtete Einführen der betreffenden Ader 16 unterstützt.

Bevor das Füllmaterial in den Kontaktierungsraum 25 eingefüllt wird, werden die in der beschriebenen Weise durch den Anschlusskörper 13 hindurchgesteckten Adern 16 mittels eines Kontaktwerkstoffes 44, beispielsweise Lot oder Leitkleber, elektrisch leitend an der zugeordneten Kontaktierungsfläche 26 befestigt. Auf diese Weise ist die elektrische Verbindung zwischen den Adern 16 und den Leiterbahnen 15 hergestellt.

Eine Zugentlastung für das Kabel 3 wird durch Verkleben des Kabelmantels 18 mit dem Anschlusskörper 13 realisiert. Hierzu ist die die Aufnahmevertiefung 28 umfangsseitig begrenzende Wandung des Anschlusskörpers 13 mit einer als Klebekanal 45 bezeichneten Durchbrechung versehen, die auf Höhe des Kabelmantels 18 des eingesteckten Kabels 3 in die Aufnahmevertiefung 28 einmündet. Im eingesteckten Zustand des Kabels 3 wird in den Klebekanal 45 fließfähiger Klebstoff eingefüllt, der sich dann aufgrund der Kapillarwirkung um den Kabelmantel 18 herum zwischen diesem und der Umfangsfläche der Aufnahmevertiefung 28 verteilt und dadurch eine großflächige Verklebung zwischen dem Kabelmantel 18 und dem Anschlusskörper 13 hervorruft. An dem Kabel 3 angreifende Zugbeanspruchungen werden somit vom Anschlusskörper 13 abgefangen und belasten nicht die elektrisch leitende Verbindung zwischen den Adern 16 und den Kontaktierungsflächen 26.

In dem Kontaktierungsraum 25 ist eine der Anzahl der zu kontaktierenden Adern 16 entsprechende Anzahl von Kontaktierungszonen 46 definiert, in denen sich jeweils eine der Kontaktierungsflächen 26 befindet. Die Austrittsmündungen 35 führen jeweils zu einer dieser Kontaktierungszonen 46. Beim Ausführungsbeispiel sind folglich drei Kontaktierungszonen 46 vorhanden.

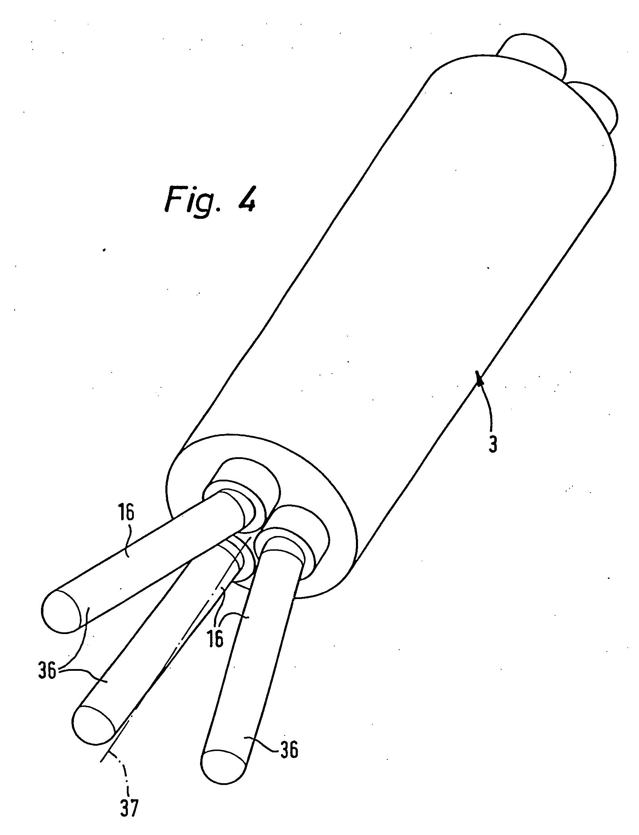

Die die Vorderwand 32 durchsetzenden, nebeneinanderliegenden Führungskanäle 33 sind in einer besonderen Weise gestaltet. Ihre Kanalwandungen bilden Führungsflächen 47, die in der Einsteckrichtung 42 derart auseinanderlaufen, dass die Adern 16 beim Hindurchstecken auseinandergespreizt werden. Im komplett eingesteckten Zustand des Kabels 3 nehmen somit die Adern 16 eine in Fig. 4 angedeutete auseinandergespreizte Stellung ein, in der die mit den Kontaktierungsflächen 26 zu kontaktierenden Endabschnitte 36 quer zur Längsachse 37 einen größeren Abstand zueinander einnehmen als während des in Fig. 5 gezeigten Ausgangszustandes.

Der vergrößerte Abstand zwischen den Adern 16 erleichtert das Applizieren des Kontaktwerkstoffes 44 und ermöglicht eine großflächige elektrische Verbindung.

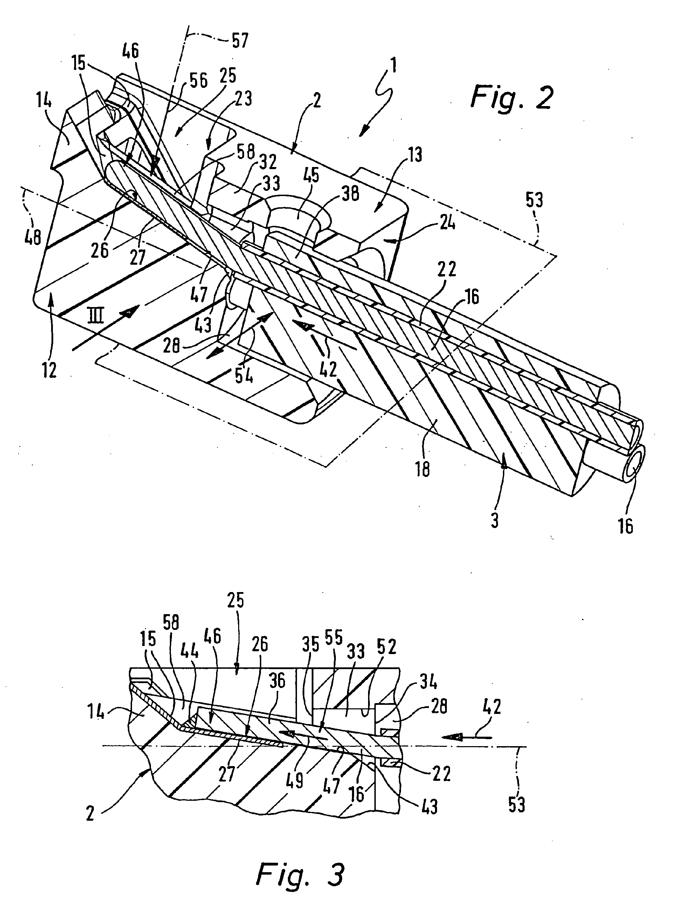

Als weiteres Merkmal ist besonders hervorzuheben, dass durch den gewählten Längsverlauf der Führungsflächen 47 die Adern 16 beim Austreten aus den Führungskanälen 33 zumindest annähernd zur längsseitigen Anlage an die sich jeweils anschließende Kontaktierungsfläche 26 geführt werden. Man erkennt aus Fig. 2 und 3, dass der Flächenverlauf der Kontaktierungsflächen 26 mit der durch einen Pfeil markierten Austrittsrichtung 49 der aus den Führungskanälen 33 austretenden Adern 16 zweckmäßigerweise gleichgerichtet ist und dass sich die Kontaktierungsflächen 26 vorzugsweise stufenlos an die Führungsflächen 47 anschließen. Die stufenlose Ausgestaltung lässt sich beispielsweise durch eine im Werkstoff des Trägerelementes 14 versenkte Unterbringung der Kontakt-Pads 27 realisieren.

Im Regelfall werden die Endabschnitte 36 während des Einsteckvorganges nach dem Austreten aus den Führungskanälen 33 selbsttätig mit den Kontaktierungsflächen 26 in Kontakt gelangen und bis zum Erreichen ihrer Endposition auf den Kontaktflächen 26 entlanggleiten. Beim anschließenden Applizieren des Kontaktwerkstoffes 44 ist es daher nicht unbedingt notwendig, die Adern 16 mittels eines Werkzeuges an die Kontaktierungsflächen 26 anzudrücken, wenngleich dies sicherheitshalber zu empfehlen ist. Ein Andrücken an die Kontaktflächen 26 sollte auf jeden Fall erfolgen, wenn die Adern 16 eine Position mit geringem Abstand neben oder über den Kontaktierungsflächen 26 einnehmen sollten.

Die Führungskanäle 33 sind beim Ausführungsbeispiel umfangsseitig durch das Material des Anschlusskörpers 13 geschlossen. Um die gewünschte Führungsfunktion zu erhalten, könnten sie über ihre gesamte Länge hinweg den gleichen Querschnitt aufweisen. Damit verbundene Krümmungen könnten jedoch das Hindurchstecken der Adern 16 beeinträchtigen.

Beim Ausführungsbeispiel sind die Führungskanäle 33 daher so ausgebildet, dass sie einen größeren Querschnitt als die Adern 16 haben und lediglich ein Teil der Wandung zur Bildung der Führungsflächen 47 beiträgt. Beim Ausführungsbeispiel, bei dem die Führungskanäle 33 um eine zweckmäßigerweise mit der Längsachse 4 zusammenfallende Zentrumsachse 48 herum verteilt angeordnet sind, werden die Führungsflächen 47 von den von der Zentrumsachse 48 radial nach außen wegweisenden Wandabschnitten der Führungskanäle 33 gebildet. Im Übrigen ist der Querschnitt der Führungskanäle 33 wie erwähnt, über die gesamte Kanallänge hinweg wesentlich größer als der Querschnitt der Adern 16, sodass die Adern beim Hindurchstecken an den den Führungsflächen 47 radial gegenüberliegenden weiteren Wandabschnitten 52 der Führungskanäle 33 im Regelfall nicht zur Anlage gelangen.

Die Führungskanäle 33 verfügen vorzugsweise über einen länglichen Querschnitt mit bezüglich der Zentrumsachse 48 radial orientierter Querschnitts-Längsachse, wobei die Kanalwandung mit Ausnahme im Bereich der Führungsflächen 47 geradlinig verläuft, während sie zur Definition der Führungsflächen 47 einen ihren Abstand von der Zentrumsachse 48 ändernden geneigten Verlauf hat.

Die aus den Führungskanälen 33 austretenden Adern 16 nehmen somit nur einen Teil des Querschnittes der Austrittsmündungen 35 ein, wobei der entsprechende Bereich als Austrittszone bezeichnet werden kann.

Zur weiteren Erläuterung möglicher Ausführungsbeispiele stellt man sich am besten eine Hauptebene 53 vor, die durch die Einsteckrichtung 42 und eine hierzu rechtwinkelige, in Fig. 3 senkrecht zur Zeichenebene stehende Querrichtung 54 aufgespannt wird. Betrachtet man die Anordnung in einer zu dieser Hauptebene 53 rechtwinkeligen, mit einem Pfeil gekennzeichneten Blickrichtung 56, so sind die Austrittszonen 55 der einzelnen Führungskanäle einschließlich der sich daran anschließenden Kontaktierungsflächen 26 nebeneinander angeordnet. Mit anderen Worten liegen somit die Kontaktierungszonen 46 in der Querrichtung 54 nebeneinander.

Die Kontaktierungsflächen 26 der einzelnen Kontaktierungszonen 46 können, wie dies beispielsweise aus Fig. 1 hervorgeht, auf unterschiedlichem Höhenniveau bezüglich der zu der Hauptebene 53 rechtwinkeligen Höhenrichtung 57 liegen. Dadurch lässt sich eine optimale Verteilung der Kontaktierungszonen im Volumen des Hauptkörpers 8 erreichen. Außerdem wird dadurch einem mögliche Kurzschlüsse hervorrufenden Fließen des Kontaktwerkstoffes 44 zwischen benachbarten Kontaktierungszonen 46 entgegengewirkt. Als weitere Schutzmaßnahme in dieser Hinsicht können zwischen benachbarten Kontaktierungszonen 46 Trennwände 58 platziert sein, die insbesondere einstückig mit dem Trägerelement 14 ausgebildet sind und die Kontaktierungszonen gegenseitig abschotten.

Bei dem Ausführungsbeispiel der Fig. 1 bis 3 steigen die Kontaktierungsflächen 26 bezogen auf die Einsteckrichtung 42 in der Höhenrichtung 57 an. Durch diesen Schrägverlauf ergibt sich eine rampenartige Ausgestaltung. Die Neigung kann bei den einzelnen Kontaktierungszonen 46 unterschiedlich ausfallen.

Möglich wäre auch eine Bauform, bei der die Kontaktierungsflächen 26 in einer zu der Hauptebene 53 parallelen Ausdehnungsebene liegen.

Die Kontaktierungsflächen 26 können zumindest teilweise auch in einer Ausdehnungsebene verlaufen, die quer und insbesondere rechtwinkelig zu der Hauptebene 53 verläuft. In diesem Fall können sie, wie dies aus Fig. 2 hervorgeht, zusätzlich oder alternativ an den Trennwänden 58 vorgesehen sein.

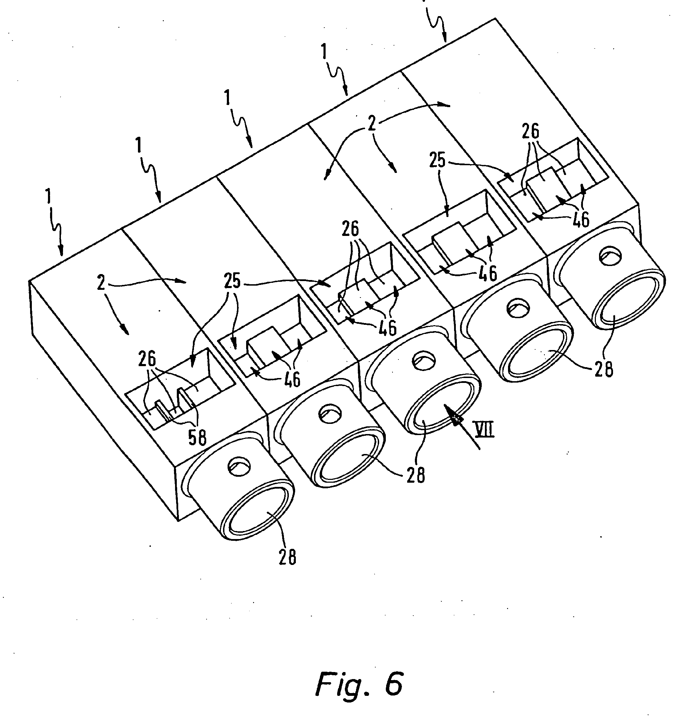

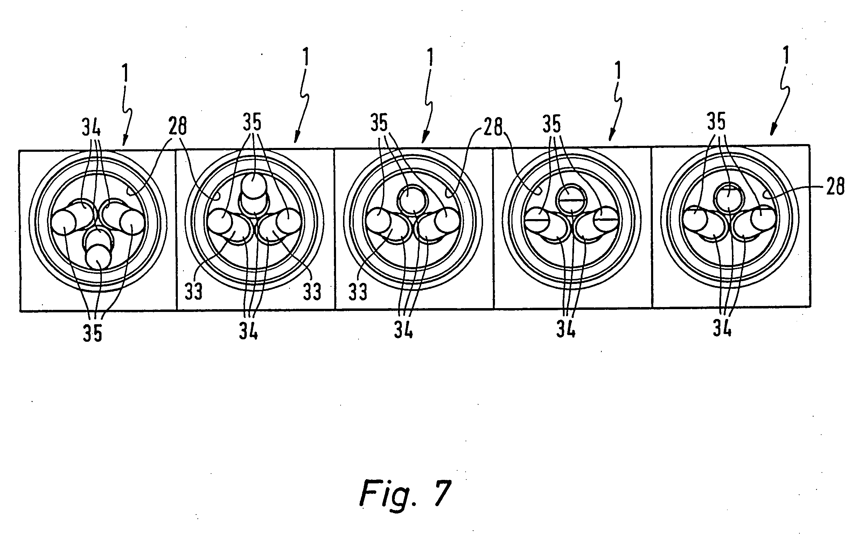

Bei den in Fig. 6 und 7 schematisch dargestellten Positionssensoren sind exemplarisch verschiedene Ausgestaltungsmöglichkeiten für die Führungskanäle 33, Führungsflächen 47 und Kontaktierungszonen 46 illustriert. Von links nach rechts betrachtet werden beim ersten Positionssensor die Adern 16 durch die Führungsflächen 47 nach unten geführt und auf die sich anschließenden ebenen Kontaktflächen 26 gepresst. Zu sehen sind hier auch Trennwände 58 zwischen benachbarten Kontaktierungszonen 46.

Beim zweiten Positionssensor werden die Adern 16 nach oben geführt, wobei der Fall auftreten kann, dass die Endabschnitte 36 beim Austritt aus den Führungskanälen 33 in der schon erwähnten Weise mit geringem Abstand über den Kontaktierungsflächen 26 schweben.

Die Ausgestaltung des dritten Positionssensors unterscheidet sich von derjenigen des zweiten Positionssensors nur dadurch, dass der mittige Führungskanal 33 einen zur Einsteckrichtung 42 parallelen Verlauf hat, sodass die Ader 16 beim Hindurchführen eben auf die zugeordnete Kontaktfläche geführt wird.

Bei dem vierten Positionssensor hat die mittlere Kontaktierungsfläche 26 einen in Einsteckrichtung ansteigenden Verlauf, während die beiden äußeren Kontaktierungsflächen 26 parallel zur Hauptebene 53 ausgerichtet sind.

Beim fünften Positionssensor schließlich sind alle drei Kontaktierungsflächen 26 bezüglich der Hauptebene 53 geneigt, sodass die Adern beim Auftreffen verstärkt gegen die Kontaktierungsflächen 26 gedrückt werden. Diese Bauform entspricht in etwa derjenigen der Fig. 1 bis 3.

Bei bis zu drei Adern 16 lassen sich die Führungskanäle 33 relativ einfach mittels eines einzigen Schiebers in einem Spritzgießwerkzeug herstellen, da die Adern 16 nicht weiter als bis zur Außenkontur des Kabelmantels nach außen gebogen werden. Bei höheren Polzahlen werden in der Regel zusätzliche Ebenen für die Unterbringung von Kontaktierungsflächen 26 erforderlich und/oder kann eine terrassenartige Verteilung erfolgen.

Das Ausführungsbeispiel ermöglicht eine elektrische Kontaktierung sehr einfach dadurch, dass man den Kontaktwerkstoff 44 schon vor dem Einstecken des Kabels an den gewünschten Stellen appliziert. Dies vereinfacht den Fertigungsprozess.

Im Zusammenhang mit der erwähnten Zugentlastung ist noch zu erwähnen, dass zur weiteren Erhöhung der Festigkeit auch die von den Adern 16 durchsetzten Führungskanäle mit Klebstoff ausgefüllt werden können.

## Patentansprüche

1. Elektrisches Bauteil, insbesondere Positionssensor, mit einem Hauptkörper (8), der einen als MID-Bauteil (MID = Moulded Interconnect Device) ausgeführten Schaltungsträger (12) und einen an dem Schaltungsträger (12) angeordneten Anschlusskörper (13) aufweist, wobei an dem Anschlusskörper (13) ein mehradriges elektrisches Kabel (3) fixierbar oder fixiert ist, dessen Adern (16) den Anschlusskörper (13) zur Kontaktierung von Leiterbahnen (15) des Schaltungsträgers (12) durchsetzen, **dadurch gekennzeichnet, dass** der Anschlusskörper (13) über mehrere nebeneinanderliegende Führungskanäle (33) verfügt, durch die die zu kontaktierenden Adern (16) des Kabels (3) hindurchsteckbar sind und deren Kanalwandungen Führungsflächen (47) bilden, die in der Einsteckrichtung (42) der Adern (16) derart divergieren, dass die Adern (16) beim Hindurchstecken auseinandergespreizt werden, und dass der Schaltungsträger (12) sich in Verlängerung der Führungskanäle (33) an deren Austrittsmündungen (35) anschließende, mit den Leiterbahnen (15) verbundene Kontaktierungsflächen (26) aufweist, an denen die Adern (16) mittels eines Kontaktwerkstoffes (44) elektrisch leitend befestigbar oder befestigt sind, wobei der Längsverlauf der Führungsflächen (47) so ausgebildet ist, dass sie die Adern (16) beim Austreten aus den Führungskanälen (33) zumindest annähernd zur längsseitigen Anlage an den sich anschließenden Kontaktierungsflächen (26) führen.

2. Bauteil nach Anspruch 1, **dadurch gekennzeichnet, dass** der Anschlusskörper (13) einstückig mit dem die Leiterbahnen tragenden Trägerelement (14) des Schaltungsträgers (12) ausgebildet ist.

3. Bauteil nach Anspruch 1 oder 2, **gekennzeichnet durch** eine von der Einsteckrichtung (42) und einer dazu rechtwinkeligen Querrichtung (54) definierte Hauptebene (53) des Hauptkörpers (8), wobei die von den Führungsflächen (47) definierten Austrittszonen (55) einschließlich der sich daran anschließenden Kontaktierungsflächen (26) mehrerer Führungskanäle (33), bei einer zu der Hauptebene (53) rechtwinkeligen Blickrichtung (56) gesehen, nebeneinander angeordnet sind.

4. Bauteil nach Anspruch 3, **dadurch gekennzeichnet, dass** die Austrittszonen (55) sämtlicher Führungskanäle (33), bei einer zu der Hauptebene (53) rechtwinkeligen Blickrichtung (56) gesehen, nebeneinander angeordnet sind.

5. Bauteil nach Anspruch 3 oder 4, **dadurch gekennzeichnet, dass** in der Querrichtung (54) einander benachbarte Kontaktierungsflächen (26) in der zur Hauptebene (53) rechtwinkeligen Höhenrichtung (57) auf unterschiedlichem Höhenniveau liegen.

6. Bauteil nach einem der Ansprüche 3 bis 5, **dadurch gekennzeichnet, dass** zwischen in der Querrichtung (54) benachbarten Kontaktierungsflächen (26) an dem die Leiterbahnen (15) tragenden Trägerelement (14) des Schaltungsträgers (12) ausgebildete Trennwände (58) vorgesehen sind.

7. Bauteil nach einem der Ansprüche 3 bis 6, **dadurch gekennzeichnet, dass** die Kontaktierungsflächen (26) zumindest teilweise in einer zu der Hauptebene (53) parallelen Ausdehnungsebene liegen.

8. Bauteil nach einem der Ansprüche 3 bis 7, **dadurch gekennzeichnet, dass** die Kontaktierungsflächen (26) zumindest teilweise in einer in Einsteckrichtung (42) ansteigenden Ausdehnungsebene liegen.

9. Bauteil nach einem der Ansprüche 3 bis 8, **dadurch gekennzeichnet, dass** die Kontaktierungsflächen (26) zumindest teilweise in einer quer und insbesondere rechtwinkelig zu der Hauptebene (53) verlaufenden Ausdehnungsebene liegen.

10. Bauteil nach einem der Ansprüche 1 bis 9, **dadurch gekennzeichnet, dass** der Flächenverlauf der Kontaktierungsflächen (26) mit der Austrittsrichtung (49) der aus den Führungskanälen (33) austretenden Adern (1) gleichgerichtet ist.

11. Bauteil nach einem der Ansprüche 1 bis 10, **dadurch gekennzeichnet, dass** sich die Kontaktierungsflächen (26) stufenlos an die Führungsflächen (33) anschließen.

12. Bauteil nach einem der Ansprüche 1 bis 11, **dadurch gekennzeichnet, dass** im Falle von mindestens drei Führungskanälen (33) diese Führungskanäle (33) um eine Zentrumsachse (48) herum verteilt angeordnet sind, wobei die Führungsflächen (47) von den von der Zentrumsachse (48) wegweisenden inneren Wandabschnitten der Führungskanäle (33) gebildet sind.

13. Bauteil nach einem der Ansprüche 1 bis 12, **dadurch gekennzeichnet, dass** die Führungskanäle (33) durch das Material des Anschlusskörpers (13) umfangsseitig geschlossen sind.

14. Bauteil nach einem der Ansprüche 1 bis 13, **dadurch gekennzeichnet, dass** die Kontaktierungsflächen (26) in mindestens einer nach dem kontaktierenden Befestigen der Adern (16) mittels eines Füllmaterials ausgefüllten Vertiefung des Schaltungsträgers (12) angeordnet sind.

15. Bauteil nach einem der Ansprüche 1 bis 14, **dadurch gekennzeichnet, dass** die Führungskanäle (33) im Bereich ihrer Eintrittsmündungen (34) mit das zielgerichtete Einführen der Adern (16) unterstützenden Einführschrägen (43) versehen sind.

16. Bauteil nach einem der Ansprüche 1 bis 15, **dadurch gekennzeichnet, dass** die zu kontaktierenden Adern (16) aus einem Kabelmantel (18) des Kabels (3) herausragen, wobei den Eintrittsmündungen (34) eine im Anschlusskörper (13) ausgebildete Aufnahmevertiefung (28) zur Aufnahme des Endabschnittes des Kabelmantels (18) vorgelagert ist.

17. Bauteil nach Anspruch 16, **dadurch gekennzeichnet, dass** die Wandung des Anschlusskörpers (13) von einem seitlich in die Aufnahmevertiefung (28) einmündenden, zum Einbringen von den Kabelmantel (18) mit dem Anschlusskörper (13) zur Zugentlastung verklebenden Klebstoffes vorgesehenen Klebekanal (45) durchsetzt ist.
